# FASCICULE DE BREVET EUROPEEN

(11) **EP 3 387 498 B1**
(45) Date de publication et mention de la délivrance du brevet: **06.11.2019**
(21) Numéro de dépôt: 16810312.5
(22) Date de dépôt: 08.12.2016
(51) Int. Cl.: G05B 19/409, B66F 11/04

(54) **PUPITRE DE COMMANDE ET NACELLE ÉLÉVATRICE COMPRENANT UN TEL PUPITRE DE COMMANDE**
STEUERKONSOLE UND LUFTSEILBAHN MIT SOLCH EINER STEUERKONSOLE
CONTROL CONSOLE AND AERIAL LIFT INCLUDING SUCH A CONTROL CONSOLE

(30) Priorité: 09.12.2015 FR 1562064
(43) Date de publication de la demande: 17.10.2018
(73) Titulaire: Haulotte Group, 42152 L'Horme (FR)
(72) Inventeur: BEJI, Slaheddine, 38200 Vienne (FR); LEMARCHAND, Ludovic, 69600 Oullins (FR)
(74) Mandataire: Lavoix
(86) Numéro de dépôt international: PCT/EP2016/080180
(87) Numéro de publication internationale: WO 2017/097874

(56) Documents cités:
- FR-A1- 3 007 401
- US-B1- 6 496 766

## Description

L'invention concerne un pupitre de commande pour une nacelle élévatrice, ainsi qu'une nacelle élévatrice comprenant un tel pupitre de commande.

Les nacelles élévatrices, ou plus généralement les plateformes élévatrices mobiles de personnel, automotrices ou non, comportent une structure élévatrice et une plateforme, sur laquelle un ou plusieurs individus sont installés pour effectuer divers travaux. La plateforme comprend généralement un pupitre de commande regroupant un certain nombre d'organes de commande manuelle permettant le contrôle de la nacelle élévatrice. FR 3 007 401 décrit un tel pupitre de commande. Une ou plusieurs unités électroniques de contrôle de la nacelle élévatrice limitent la possibilité de mouvement en fonction d'un certain nombre de paramètres, parmi lesquels la stabilité, les limitations mécaniques de mouvements et les exigences normatives. Il est donc possible qu'une action d'un opérateur sur un organe de commande manuelle ne soit pas suivie d'effets du fait d'une limitation imposée par le contrôle commande. Cela est source de confusion pour l'opérateur, qui ne sait pas quels mouvements sont autorisés ou non et quelles actions il peut effectuer pour atteindre sa destination. Ce problème est particulièrement amplifié sur les machines complexes, notamment les nacelles articulées de grande hauteur qui se déploient suivant une séquence prédéfinie. En outre, l'opérateur n'a pas forcément une connaissance approfondie du fonctionnement du véhicule car il peut être d'un corps de métier différent et n'avoir reçu qu'une formation rudimentaire sur le fonctionnement d'une nacelle élévatrice.

Le pupitre de commande d'une nacelle élévatrice est équipé de voyants d'alertes généralement regroupés dans une même zone. On connait notamment un voyant de surcharge qui signale que la masse embarquée dans la plateforme excède la capacité maximale autorisée, un voyant de dévers qui signale que l'inclinaison du châssis dépasse la valeur maximale autorisée et un voyant de limitation de mouvement qui signale que la structure élévatrice de la machine a atteint une position au-delà de laquelle elle ne peut plus se déplacer. Aucun de ces voyants n'informe l'utilisateur des organes de commande manuelle qu'il peut actionner pour sortir la machine de cet état d'alerte.

Il est connu d'équiper le pupitre de commande d'un écran représentant schématiquement les organes de commande manuelle du pupitre de commande, avec des signes de couleur affichant si un organe de commande est actionnable ou non. Toutefois, la lecture d'un écran peut être difficile en plein soleil, et un écran est exposé à de potentielles détériorations provoquées par des projections de peinture, de sablage ou par des coups dans le cadre des travaux effectués sur la plateforme. Une technologie d'écran renforcée est donc nécessaire, ce qui implique un coût important. En outre, le lien cognitif entre les organes de commande manuelle que les opérateurs manipulent et leur représentation schématique sur un écran n'est pas forcément évident.

C'est à ces inconvénients qu'entend remédier l'invention en proposant un nouveau pupitre de commande pour une nacelle élévatrice, dans lequel les différentes actions réalisables par un opérateur en fonction des conditions d'utilisation de la nacelle élévatrice sont disponibles de façon claire pour l'opérateur.

A cet effet, l'invention concerne un pupitre de commande pour une nacelle élévatrice incluant un châssis, une plateforme et une structure élévatrice reliant le châssis à la plateforme, le pupitre de commande comprenant des organes de commande manuelle de contrôle de la nacelle élévatrice. Ce pupitre de commande est caractérisé en ce qu'il comprend, pour au moins un des organes de commande manuelle, au moins un indicateur lumineux prévu sur ou dans l'environnement immédiat de cet organe de commande manuelle et adapté pour émettre des signaux lumineux indiquant la possibilité d'actionnement de cet organe de commande manuelle en fonction de conditions de fonctionnement de la nacelle élévatrice.

Grâce à l'invention, un opérateur peut directement savoir quel organe de commande manuelle est actionnable, et déterminer de quelle façon déplacer la nacelle élévatrice ou une partie de cette nacelle élévatrice en fonction de ses besoins, sans pour autant nécessiter une connaissance approfondie de son fonctionnement.

Selon des aspects avantageux mais non obligatoires de l'invention, un tel pupitre de commande peut incorporer une ou plusieurs des caractéristiques suivantes, prises dans toute combinaison techniquement admissible :
- Chaque organe de commande manuelle est actionnable dans au moins deux directions, et le pupitre de commande comprend des indicateurs lumineux correspondant à l'un des organes de commande manuelle et adaptés pour signaler la possibilité d'actionnement de cet organe de commande manuelle dans chacune des directions d'actionnement possibles, en fonction de la possibilité de réalisation des mouvements de la nacelle élévatrice commandés par l'actionnement de cet organe de commande manuelle dans ces directions.
- Chaque indicateur lumineux est positionné par rapport à l'organe de commande manuelle correspondant dans une direction correspondant à une direction d'actionnement de cet organe de commande manuelle.
- Le ou les indicateurs lumineux correspondants à un organe de commande manuelle sont placés à une distance de cet organe de commande manuelle inférieure à la distance séparant le ou les indicateurs lumineux d'un autre organe de commande manuelle.

- Au moins un des indicateurs lumineux est fixé directement sur un panneau principal du pupitre de commande.
- Au moins un des indicateurs lumineux est prévu sur une embase fixée sur un panneau principal du pupitre de commande.
- Au moins un des indicateurs lumineux est fixé sur l'organe de commande manuelle correspondant à cet indicateur lumineux.
- L'embase est formée par un circuit imprimé rigide recouvert d'une membrane étanche, et au moins un des indicateurs lumineux est intégré au circuit imprimé rigide.
- Les indicateurs lumineux sont surmontés d'un diffuseur adapté pour élargir la surface d'émission lumineuse des indicateurs lumineux.
- Les diffuseurs sont adaptés pour former une surface lumineuse d'une forme prédéfinie.
- Les indicateurs lumineux sont adaptés pour émettre un ou plusieurs signaux lumineux parmi:
   - un signal lumineux rouge permanent en cas d'impossibilité de réalisation d'un mouvement ;
   - un signal lumineux rouge émis uniquement en cas d'actionnement d'un organe de commande manuelle alors que le mouvement correspondant est impossible ;
   - un clignotement vert au cours de l'actionnement d'une commande manuelle correspondant à un mouvement réalisable.
- Au moins un indicateur lumineux est adapté pour afficher un signal lumineux témoignant qu'un actionneur de la nacelle élévatrice, utilisé pour réaliser le mouvement commandé par cet organe de commande manuelle, est ou n'est pas en fin de course.
- Les conditions de fonctionnement de la nacelle élévatrice comprennent au moins un paramètre parmi une liste incluant au moins :
   - la position de la plateforme par rapport à une enveloppe de mouvements autorisés ;
   - la masse emportée sur la plateforme ;
   - l'angle d'inclinaison du châssis ;
   - le roulage du châssis au sol ou le déplacement de la structure élévatrice.

L'invention concerne également une nacelle élévatrice comprenant un pupitre de commande tel que mentionné ci-dessus.

L'invention sera mieux comprise et d'autres avantages de celle-ci apparaîtront plus clairement à la lumière de la description qui va suivre, d'un pupitre de commande et d'une nacelle élévatrice conformes à son principe, faite à titre d'exemple non limitatif en référence aux dessins annexés dans lesquels :
- la figure 1 est une vue en perspective d'un pupitre de commande conforme à l'invention ;
- la figure 2 est une vue en perspective éclatée du montage d'un organe de commande manuelle sur le pupitre de commande de la figure 1 ;
- la figure 3 est une vue du dessus d'un organe de commande manuelle représentant un mode de réalisation d'indicateurs visuels ;
- la figure 4 est une vue de dessus du pupitre de commande de la figure 1, dans une première configuration d'affichage d'indicateurs visuels;
- la figure 5 est une vue en perspective d'une nacelle élévatrice conforme à l'invention, dans une position correspondant à la configuration du pupitre de commande de la figure 4 ;
- la figure 6 est une vue analogue à la figure 4, pour une seconde configuration d'affichage d'indicateurs visuels ;
- la figure 7 est une vue en perspective d'une nacelle élévatrice conforme à l'invention, dans une position correspondant à une configuration de chargement de la plateforme ;
- la figure 8 est une vue analogue aux figures 4 et 6, pour une troisième configuration du pupitre de commande ;
- la figure 9 est une vue analogue aux figures 4, 6 et 8, pour une quatrième configuration du pupitre de commande.

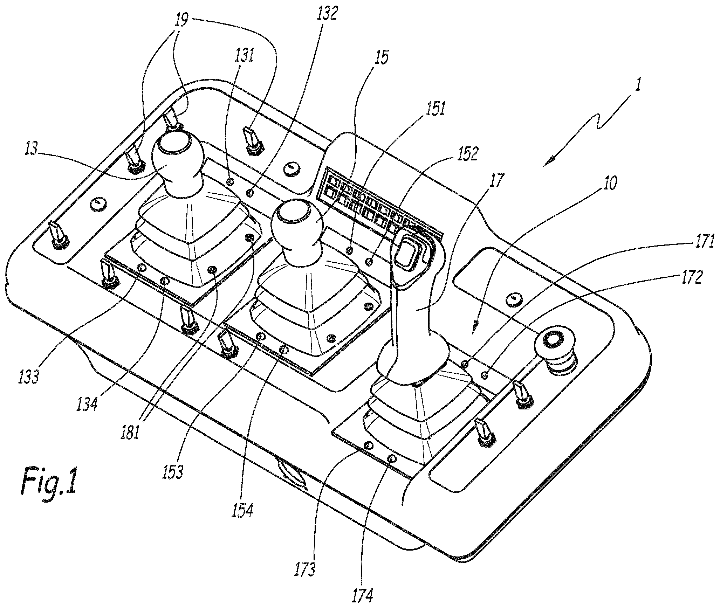

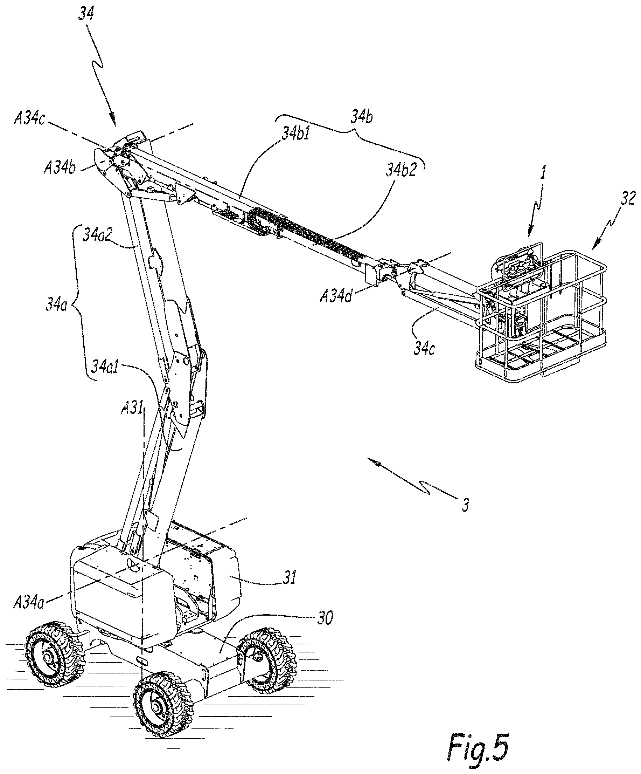

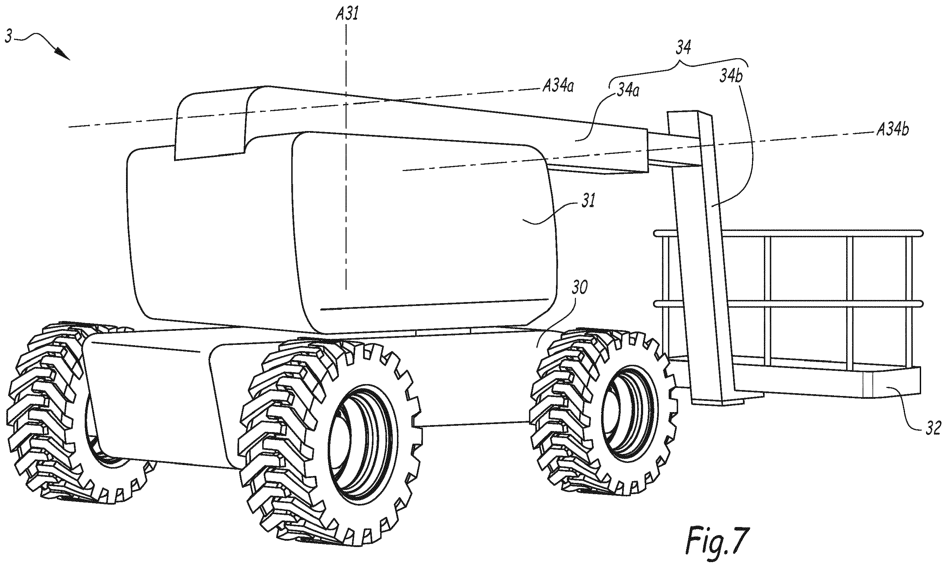

La figure 1 représente un pupitre de commande 1 pour une nacelle élévatrice 3 représentée aux figures 5 et 7. Le pupitre de commande 1 comprend un panneau principal 10 et trois organes de commande manuelle 13, 15 et 17. Le pupitre de commande 1 comprend également plusieurs interrupteurs de commande 19 répartis sur le panneau principal 10, et adaptés pour contrôler certaines fonctionnalités de la nacelle élévatrice 3. Les modes de réalisation des organes de commande manuelle 13, 15 et 17 et des interrupteurs de commande 19 sont connus et on les décrira d'une manière simplifiée pour faciliter la compréhension de l'invention.

La nacelle élévatrice 3 comprend un châssis 30 muni d'organes de déplacement au sol tels que des roues ou des chenilles, une plateforme 32 et une structure élévatrice 34 de la plateforme 32 par rapport au châssis 30.

La structure élévatrice 34 comprend un bras inférieur déployant 34a, un bras supérieur télescopique 34b et un bras pendulaire 34c, qui fait la liaison entre le bras supérieur 34b et la plateforme 32. Le bras inférieur 34a comprend deux sections 34a1 et 34a2 pivotantes l'une par rapport à l'autre et permet de déplacer la plateforme 32 suivant une direction verticale. Le bras supérieur télescopique 34b est monté avec possibilité de pivotement par rapport au bras inférieur 34a selon un axe A34b. Le bras supérieur 34b comprend deux sections 34b1 et 34b2 coulissantes l'une par rapport à l'autre suivant un axe A34c pour faire varier la distance entre la plateforme 32 et l'axe A34b. On décrit couramment la diminution de cette distance par l'expression « rentrée du télescope » et son augmentation par l'expression « sortie du télescope ». Le bras pendulaire 34c est monté avec possibilité de pivotement par rapport au bras supérieur télescopique 34b selon un axe A34d et permet un ajustement vertical de faible amplitude de la position de la plateforme 32.

En variante non représentée, le bras inférieur 34a peut ne pas comprendre deux sections pivotantes mais des sections télescopiques.

Le châssis 30 comprend également une tourelle 31, qui supporte la structure élévatrice 34. La tourelle 31 est mobile en rotation par rapport au châssis 30 selon un axe A31 perpendiculaire aux axes des roues du châssis 30.

Le bras inférieur 34a est également pivotant par rapport à la tourelle 31 selon un axe A34a perpendiculaire à l'axe de rotation A31 de la tourelle 31.

L'organe de commande 13 permet de contrôler la rentrée ou la sortie du télescope du bras supérieur télescopique 34b et la rotation de la tourelle 31. L'organe de commande 13 est actionnable en avant ou en arrière, pour la rentrée ou la sortie du télescope du bras supérieur télescopique 34b, et à gauche ou à droite, pour contrôler la rotation de la tourelle 31 par rapport au châssis 30.

L'organe de commande manuelle 15 permet respectivement de lever ou de descendre le bras inférieur 34a, en actionnant l'organe de commande 15 en avant ou en arrière.

L'organe de commande manuelle 17 contrôle le déplacement au sol du châssis 30. L'organe de commande 17 est actionnable en avant ou en arrière, pour contrôler respectivement l'avancée ou le recul de la nacelle élévatrice 3.

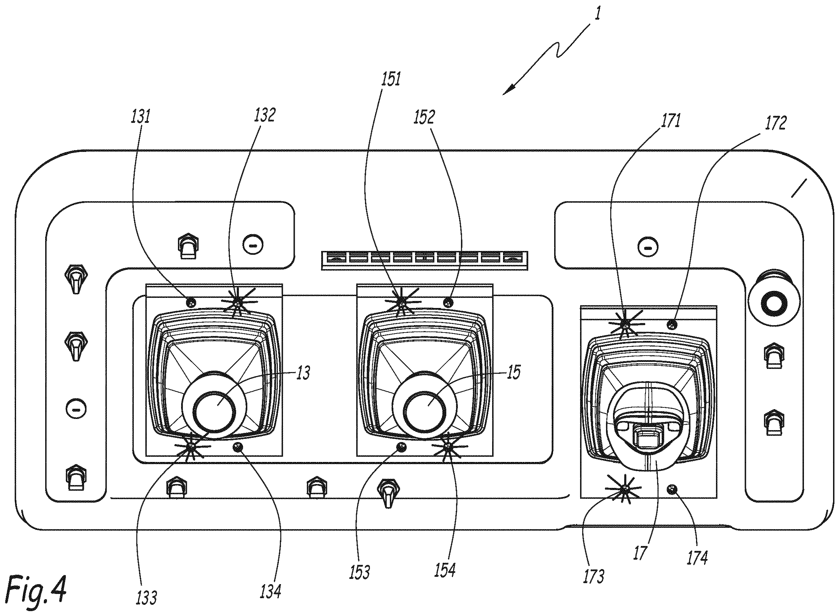

Les termes avant et arrière sont employés par rapport à une personne se trouvant devant le pupitre de commande 1, l'avant désignant la direction se trouvant devant la personne, l'arrière étant la direction se trouvant derrière la personne. Sur les figures 4, 6 et 8, le côté avant se situe vers le haut de la figure, tandis que le côté arrière se situe vers le bas de la figure. Dans la configuration de la nacelle 3 représentée à la figure 5, la direction avant est orientée selon l'axe A34c en direction de l'axe A34b.

Afin de permettre à un opérateur contrôlant la nacelle élévatrice 3 de savoir quels mouvements sont réalisables, le pupitre de commande 1 comprend au moins un indicateur lumineux permettant de signaler, par un signal lumineux émis dans l'environnement immédiat d'un des organes de commande manuelle 13, 15 et 17, si l'actionnement de cet organe de commande manuelle est possible au vu des conditions de fonctionnement de la nacelle élévatrice 3.

Par le terme « mouvements » on entend toutes les actions possibles pouvant être réalisées sur la nacelle élévatrice 3, ce qui inclut les déplacements au sol du châssis 30, le déploiement vertical des sections 34a1 et 34a2 du bras inférieur 34a, la rotation du bras supérieur télescopique 34b autour de l'axe A34b, le coulissement des sections 34b1 et 34b2 du bras supérieur télescopique A34b suivant l'axe A34c, le déplacement vertical bras pendulaire 34c, la rotation de la tourelle 31 autour de l'axe A31.

Par l'expression « environnement immédiat », on entend que le ou les indicateurs lumineux sont placés autour et à une distance de l'organe de commande manuelle dont ils indiquent les possibilités de déplacement de manière à éviter la confusion avec un autre organe de commande manuelle. Avantageusement, le ou les indicateurs lumineux correspondant à un organe de commande manuelle sont placés à une distance de cette commande manuelle inférieure à la distance séparant ces indicateurs lumineux des autres organes de commande manuelle. Encore plus avantageusement, les indicateurs lumineux sont placés à une distance maximale prédéfinie des organes de commande manuelle desquelles ils indiquent la possibilité d'actionnement, par exemple 5 cm.

Les conditions de fonctionnement de la nacelle 3 correspondent à l'état des différentes parties de la nacelle élévatrice 3, notamment la position de la plateforme 32 par rapport à une enveloppe de déplacement autorisé prédéfinie par rapport à la nécessité de conservation de la stabilité de la nacelle élévatrice 3 et aux normes de sécurité, et les possibilités mécaniques de déplacement des différentes parties de la structure élévatrice 34. Les conditions de fonctionnement incluent également des paramètres mesurés par des capteurs, notamment, par exemple, la masse présente sur la plateforme 32 et l'inclinaison du châssis 30, qui sont limitées pour des questions de sécurité. Les conditions de fonctionnement incluent également les organes de commande en cours d'utilisation par l'opérateur de la nacelle élévatrice 3. Les mécanismes du bras inférieur 34a et du bras supérieur télescopique 34b sont équipés de capteurs de position non représentés. Ces capteurs de position peuvent être de type « tout ou rien » ou de type proportionnel, par exemple des enrouleurs à câble. Ces capteurs de position peuvent être intégrés notamment dans les actionneurs de la nacelle 3, par exemple dans un vérin permettant le déploiement du bras inférieur 34a. Ainsi la limitation mécanique résultant de l'arrivée en fin de course d'un actionneur est prise en compte dans les conditions de fonctionnement.

Dans l'exemple représenté, le pupitre de commande 1 comprend, pour chacun des organes de commande manuelle 13, 15 et 17, des indicateurs lumineux positionnés par rapport à ces organes de commande manuelle dans les directions dans lesquelles ces organes de commande manuelle sont actionnables.

Plus précisément, le pupitre de commande 1 comprend quatre indicateurs lumineux 131, 132, 133 et 134 positionnés autour de l'organe de commande 13 dans son environnement immédiat. Les indicateurs 131 et 132 sont prévus du côté avant de l'organe de commande 13, tandis que les indicateurs 133 et 134 sont prévus du côté arrière de l'organe de commande 13. Les indicateurs 131 et 132 permettent donc d'afficher la possibilité d'actionnement de l'organe de commande 13 vers l'avant. De préférence, l'indicateur lumineux 131 émet une lumière d'une couleur indiquant l'impossibilité d'actionner l'organe de commande manuelle 13 vers l'avant, par exemple le rouge, tandis que l'indicateur lumineux 132 émet une lumière d'une couleur indiquant la possibilité d'actionner l'organe de commande manuelle 13 vers l'avant, par exemple le vert. Il en est de même pour les indicateurs 133 et 134, qui affichent respectivement une lumière rouge et une lumière verte, pour l'actionnement de l'organe de commande manuelle 13 vers l'arrière.

Lorsque l'indicateur lumineux 131 émettant une lumière rouge s'allume, cela signifie qu'il n'est pas possible d'actionner l'organe de commande 13 vers l'avant car le mouvement correspondant de la nacelle élévatrice 3, c'est-à-dire la rentrée du télescope du bras supérieur télescopique 34b, ne peut pas être réalisé. A l'inverse, lorsque le signal vert de l'indicateur 132 s'allume, cela signifie que l'organe de commande 13 peut être actionnée vers l'avant, car la rentrée du télescope du bras supérieur télescopique 34b est possible.

Il en va de même pour les signaux rouge et vert respectifs émis par les indicateurs 133 et 134 pour l'actionnement de l'organe de commande 13 vers l'arrière, correspondant à la sortie du télescope du bras supérieur télescopique 34b.

Dans l'exemple représenté, la possibilité d'actionnement de l'organe de commande manuelle 13 à gauche ou à droite n'est pas indiquée par des indicateurs lumineux. En variante non représentée, il est possible de prévoir sur le pupitre de commande 1, dans l'environnement immédiat de l'organe de commande manuelle 13, des indicateurs lumineux indiquant la possibilité d'actionnement de l'organe de commande manuelle 13 à gauche ou à droite.

Les organes de commande manuelle 15 et 17 comprennent également chacune un groupe de quatre indicateurs lumineux respectifs 151, 152, 153, 154 et 171, 172, 173, 174. Les actionnements des organes de commande 15 et 17 vers l'avant et vers l'arrière sont indiqués en rouge ou en vert en fonction de leur possibilité de réalisation de façon analogue à ce qui est décrit en référence à l'organe de commande manuelle 13.

Les indicateurs lumineux sont de préférence formés par des diodes électroluminescentes (LED). Les indicateurs lumineux sont tous connectés électriquement à une ou plusieurs unités électroniques de contrôle de la nacelle élévatrice 3, adaptées pour centraliser les algorithmes de commande de la nacelle élévatrice 3, les informations concernant les conditions de fonctionnement, notamment les informations reçues sous la forme de signaux émis par les capteurs de position du bras inférieur 34a et du bras supérieur 34b, et émettre les signaux électriques à destination des indicateurs lumineux permettant l'affichage des signaux lumineux indiquant les possibilités de mouvement déterminées par les algorithmes de commande.

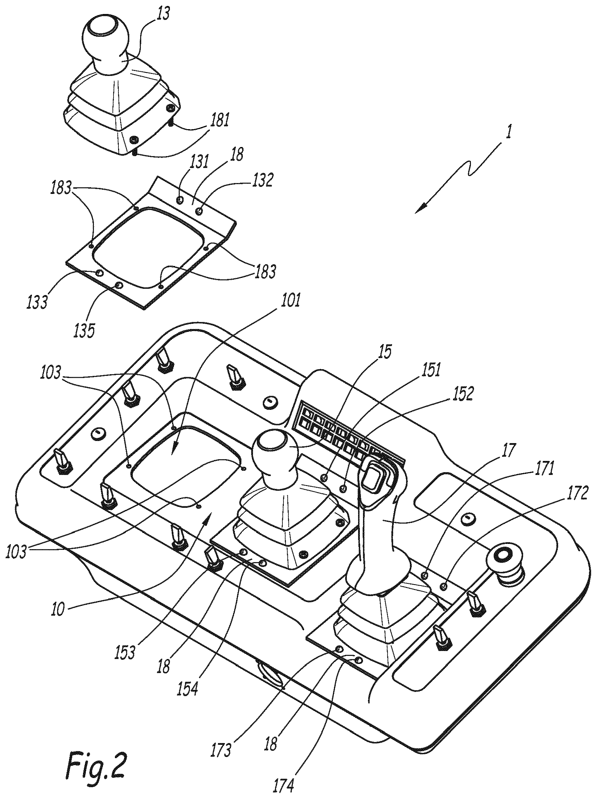

Comme cela est représenté sur la figure 2, les indicateurs lumineux peuvent être prévus sur des embases 18 fixées entre le panneau principal 10 et les organes de commande manuelle 13, 15 et 18. Le panneau principal 10 comprend trois ouvertures, dont une est visible et porte la référence 101, et dans lesquelles les organes de commande manuelle 13, 15 et 17 sont montés. Les embases 18 sont fixées sur les bords des ouvertures 101, et les organes de commande manuelle 13, 15 et 17 sont eux-mêmes fixés sur les embases 18, par exemple au moyen de vis 181 insérées dans des trous 183 des embases 18 puis dans des trous 103 du panneau principal 10. Les embases 18 peuvent être constituées d'un circuit imprimé rigide qui intègre les indicateurs lumineux et est recouvert d'une membrane faite d'un matériau protecteur et étanche tel que le polycarbonate. Ceci permet de simplifier l'intégration des indicateurs lumineux au pupitre de commande 1, en évitant le perçage du panneau principal rigide 10 pour chaque indicateur lumineux.

Selon un autre mode de réalisation non représenté de l'invention, une seule embase 18 peut recouvrir toute la surface du panneau principal 10. L'embase 18 peut également inclure certains des interrupteurs 19 formés par exemple par des parties flexibles de type clavier membrane.

Selon un mode de réalisation non représenté de l'invention, au moins un des indicateurs lumineux est fixé directement sur le panneau principal 10. Dans ce cas, le panneau principal 10, qui est formé par une plaque de matériau rigide, est percé d'un ou plusieurs orifices dans lesquels les indicateurs lumineux sont montés et connectés électriquement.

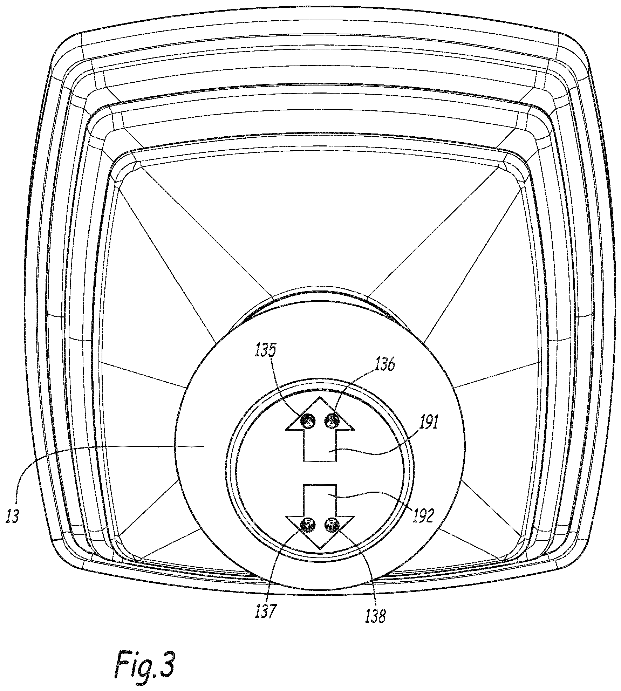

Selon un mode de réalisation alternatif représenté à la figure 3, au moins un des indicateurs lumineux peut être fixé directement sur l'organe de commande manuelle correspondant à cet indicateur lumineux. Des indicateurs lumineux 135, 136, 137 et 138 sont fixés sur la commande manuelle 13 et se substituent respectivement aux indicateurs lumineux 131, 132, 133 et 134.

Comme cela est représenté à la figure 3 par les indicateurs lumineux 135, 136, 137 et 138, et peut être appliqué aux autres modes de réalisation, les indicateurs lumineux sont de préférence surmontés de diffuseurs adaptés pour élargir leur surface d'émission lumineuse et améliorer leur visibilité en conditions de luminosité faible. De tels diffuseurs peuvent, par exemple, comprendre une pièce translucide en matière plastique, dans laquelle un ou plusieurs indicateurs lumineux sont reçus. La forme du diffuseur peut représenter un symbole, par exemple une flèche. Sur la figure 3, deux diffuseurs 191 et 192 en forme de flèche sont prévus sur l'organe de commande 13. Le diffuseur 191 est orienté vers l'avant et englobe les indicateurs lumineux 135 et 136, alors que le diffuseur 192 est orienté vers l'arrière et englobe les indicateurs lumineux 137 et 138. Ainsi chacun des diffuseurs 191 et 192 s'éclaire alternativement en rouge ou en vert. Les diffuseurs peuvent être, par exemple, fabriqués de façon monobloc avec les embases 18.

Les indicateurs lumineux sont adaptés pour émettre un ou plusieurs types de signaux lumineux. Les indicateurs à signal de couleur rouge comme les indicateurs 131, 133, 151, 153, 171 et 173 sont adaptés pour émettre un signal lumineux rouge permanent en cas d'impossibilité de réalisation d'un mouvement. En variante, ce signal lumineux rouge est émis uniquement en cas d'actionnement d'un organe de commande manuelle alors que le mouvement correspondant est impossible, afin d'éviter la pollution de la vision de l'opérateur par un trop grand nombre de signaux lumineux.

Les indicateurs lumineux à lumière verte, comme les indicateurs 132, 134, 152, 154, 172 et 174 sont adaptés pour émettre un clignotement vert au cours de l'actionnement d'un organe de commande manuelle correspondant à un mouvement réalisable.

Des exemples de fonctionnement de l'invention sont représentés sur les figures 4 à 9. Sur les figures 4 et 5, la nacelle élévatrice 3 est dans une configuration dans laquelle, d'une part, les sections 34a1 et 34a2 du bras 34a sont entièrement déployées et dirigées vers le haut et d'autre part, les sections 34b1 et 34b2 du bras supérieur télescopique 34b sont dans une position où un mouvement supplémentaire de sortie du télescope risque de déséquilibrer et faire basculer la nacelle élévatrice 3.

Dans cette configuration, le bras inférieur 34a atteint une limite mécanique de son enveloppe de mouvement qui est détectée par un capteur de position non représenté. Le basculement vers le haut du bras inférieur 34a autour de l'axe A34a n'est pas réalisable. L' indicateur lumineux 151 de l'organe de commande 15 est allumé et émet une lumière rouge, indiquant que l'actionnement de l'organe de commande 15 en avant n'aura pas d'effet. Le basculement vers le bas du bras inférieur 34a reste en revanche toujours possible, ce qui est indiqué par l'indicateur 154 qui émet un signal vert.

Dans une telle configuration, des signaux lumineux témoignent qu'un actionneur de la nacelle 3 utilisé pour réaliser un des mouvements commandés par les organes de commande manuelle 13, 15 ou 17 est ou n'est pas en fin de course.

Dans cette même configuration, la sortie du télescope du bras supérieur télescopique 34b suivant l'axe A34c n'est pas autorisée par les unités de contrôle électroniques. L'indicateur lumineux 133 de l'organe de commande 13 est allumé et émet une lumière rouge, indiquant que l'actionnement de l'organe de commande 13 en arrière n'aura pas d'effet. La rentrée du télescope du bras supérieur télescopique 34b reste en revanche toujours possible, ce qui est indiqué par l'indicateur 132 qui émet un signal vert.

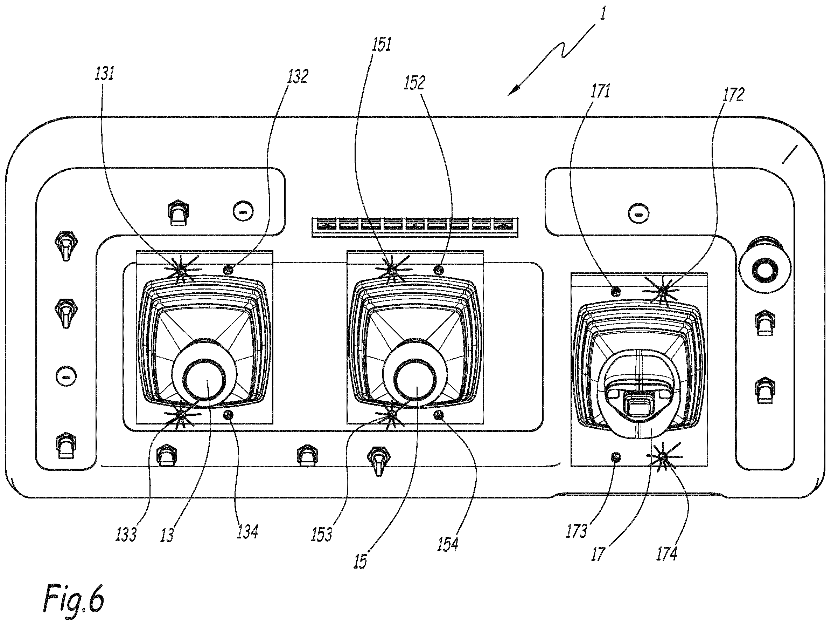

Certaines exigences normatives, notamment dans l'Union Européenne, interdisent d'effectuer simultanément un mouvement de la structure élévatrice 34 et un déplacement du châssis 30 sur le sol. La figure 6 représente une situation où l'organe de commande manuelle 17 de roulage du châssis 30 est en cours d'actionnement. Les organes de commande manuelle 13 et 15 de la structure élévatrice 34 sont rendus inopérants ce qui est indiqué par l'allumage des indicateurs lumineux rouges 131, 133, 151 et 153. Dans la situation inverse - non représentée - où un des organes de commande manuelle 13 et 15 de la structure élévatrice est en cours d'actionnement, l'organe de commande manuelle 17 de roulage du châssis 30 est rendu inopérant, ce qui est indiqué par l'allumage des indicateurs lumineux 171 et 173 qui émettent une lumière rouge.

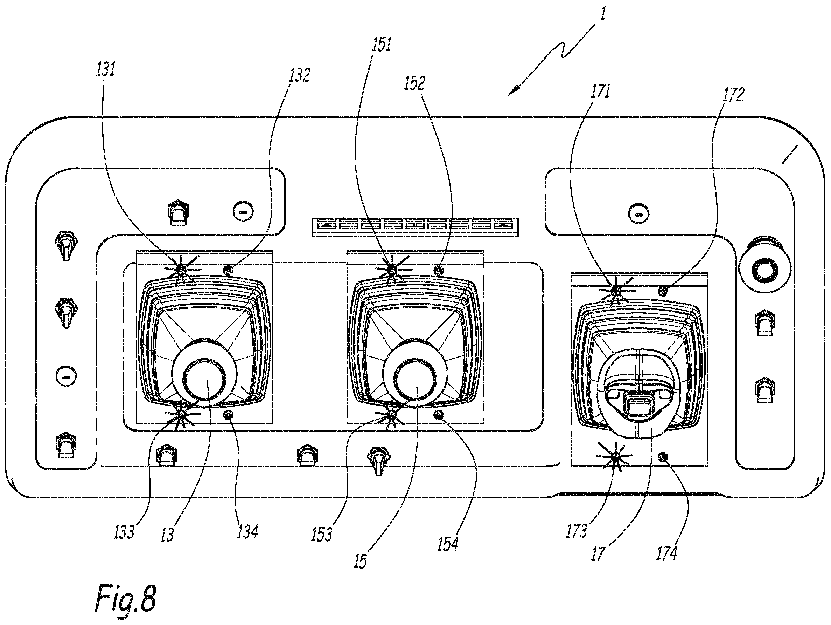

Dans la configuration des figures 7 et 8, la plateforme 32 se trouve près du sol, permettant à une ou plusieurs personnes de prendre place sur la plateforme 32. L'utilisation de la nacelle élévatrice 3 est limitée à un poids prédéterminé sur la plateforme 32. Si la masse des personnes ou des matériels emportés sur la plateforme 32 dépasse une valeur seuil, les organes de commande manuelle 13, 15 et 17 deviennent inopérants, et les indicateurs lumineux 131, 133, 151, 153, 171 et 173 sont éclairés pour afficher une lumière rouge indiquant l'impossibilité de déplacement du fait du dépassement de la masse autorisée.

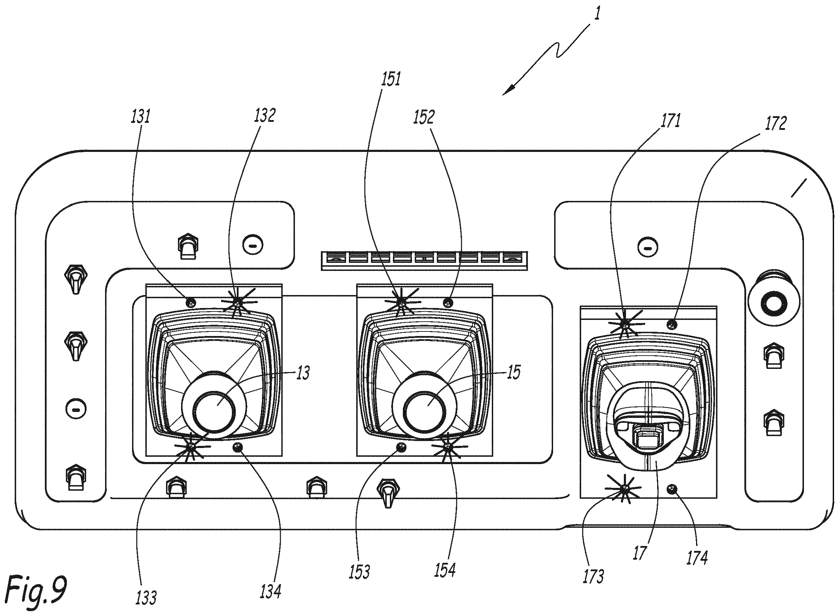

Dans une configuration illustrée par le pupitre de commande représenté à la figure 9, l'inclinaison du châssis 30 dépasse la valeur maximale autorisée. Dans cette situation les unités de contrôle électroniques interdisent tous les mouvements qui accroissent le risque de basculement de la machine. L'actionnement de l'organe de commande manuelle 17 de roulage du châssis 30 est rendu inopérant dans les deux directions, ce qui est indiqué par l'allumage des indicateurs lumineux 171 et 173 qui émettent une lumière rouge. La sortie du télescope du bras supérieur télescopique 34b suivant l'axe A34c et le basculement vers le haut du bras inférieur 34a autour de l'axe A34a ne sont pas autorisés, ce qui est indiqué par l'allumage des indicateurs lumineux 133 et 151 qui émettent une lumière rouge. La rentrée du télescope du bras supérieur télescopique 34b et le basculement vers le bas du bras inférieur 34a autour de l'axe A34a restent en revanche toujours possibles, ce qui est indiqué par les indicateurs 132 et 154 qui émettent un signal vert.

Selon un autre aspect optionnel, l'intensité lumineuse des indicateurs lumineux est modifiable. L'intensité lumineuse peut être réglée manuellement par un opérateur, ou bien s'ajuster automatiquement en fonction de la luminosité de l'éclairage ambiant.

D'autres configurations non représentées de limitations de mouvements des différentes parties de la nacelle élévatrice 3 peuvent également être indiquées par les indicateurs lumineux associés aux organes de commande manuelle 13, 15 et 17, en fonction des différentes possibilités de déploiement de la structure élévatrice 34. En outre, d'autres organes de commande manuelle non représentés, permettant de contrôler d'autres fonctionnalités de la nacelle élévatrice 3, peuvent être associés à des indicateurs lumineux afin d'indiquer leur possibilité d'actionnement.

De façon générale, la signalisation par les indicateurs lumineux des mouvements possibles permet de faciliter la prise en main de la nacelle élévatrice 3 par des personnels non qualifiés, qui ont la possibilité de savoir quel organes de commande manuelle du pupitre de commande 1 est actionnable pour réaliser un déplacement ou une action donnée. Cela permet également d'éviter les situations de blocage en une position de la plateforme 32, et d'aider l'opérateur à retourner vers le sol. En outre, les indicateurs lumineux permettent un apprentissage par la pratique du fonctionnement de la nacelle élévatrice aux personnels n'ayant pas de formation préalable, ce qui leur permet de comprendre les possibilités et limitations de la nacelle élévatrice et de les anticiper.

Selon un mode de réalisation non représenté, les indicateurs lumineux peuvent comprendre plus de quatre indicateurs pour chaque organe de commande manuelle, en fonction du nombre de directions d'actionnement possible des organes de commande manuelle.

Selon un autre mode de réalisation non représenté, chaque organe de commande manuelle peut être associé à un seul indicateur lumineux pour chaque direction d'actionnement, adapté pour s'éclairer de deux couleurs différentes. Les signaux émis par les indicateurs lumineux peuvent également être de couleurs différentes du rouge et du vert.

Selon un autre mode de réalisation non représenté, chaque organe de commande manuelle du pupitre de commande 1 peut être associé à un seul indicateur lumineux, adapté pour indiquer si cet organe de commande manuelle est utilisable ou non, par exemple par l'affichage de deux signaux lumineux de couleurs différentes.

Les caractéristiques des modes de réalisation et variantes décrits ci-dessus peuvent être combinées pour former de nouveaux modes de réalisation de l'invention.

Par ailleurs, l'invention ne se limite pas à une nacelle élévatrice à bras articulé. Elle est applicable également à tous les types de nacelles élévatrices de personnel, notamment les structures élévatrices de type bras télescopique, ciseau et mât vertical et les nacelles montées sur un châssis de camion ou un châssis de remorque.

## Revendications

1. Pupitre de commande (1) pour une nacelle élévatrice (3) incluant un châssis (30), une plateforme (32) et une structure élévatrice (34) reliant le châssis (30) à la plateforme (34), le pupitre de commande (1) comprenant des organes de commande manuelle (13, 15, 17) de contrôle de la nacelle élévatrice (3), **caractérisé en ce qu'**il comprend, pour au moins un des organes de commande manuelle (13, 15, 17), au moins un indicateur lumineux (131-134, 135-138, 151-154, 171-174) prévu sur ou dans l'environnement immédiat de cet organe de commande manuelle (13, 15, 17) et adapté pour émettre des signaux lumineux indiquant la possibilité d'actionnement de cet organe de commande manuelle (13, 15, 17) en fonction de conditions de fonctionnement de la nacelle élévatrice (3).

2. Pupitre de commande selon la revendication 1, **caractérisé en ce que** chaque organe de commande manuelle (13, 15, 17) est actionnable dans au moins deux directions, et **en ce que** le pupitre de commande (1) comprend des indicateurs lumineux (131-134, 135-138, 151-154, 171-174) correspondant à l'un des organes de commande manuelle (13, 15, 17) et adaptés pour signaler la possibilité d'actionnement de cet organe de commande manuelle (13, 15, 17) dans chacune des directions d'actionnement possibles, en fonction de la possibilité de réalisation des mouvements de la nacelle élévatrice (3) commandés par l'actionnement de cet organe de commande manuelle (13, 15, 17) dans ces directions.

3. Pupitre de commande selon la revendication 2, **caractérisé en ce que** chaque indicateur lumineux (131-134, 135-138, 151-154, 171-174) est positionné par rapport à l'organe de commande manuelle (13, 15, 17) correspondant dans une direction correspondant à une direction d'actionnement de cet organe de commande manuelle (13, 15, 17).

4. Pupitre de commande selon l'une des revendications précédentes, **caractérisé en ce que** le ou les indicateurs lumineux (131-134, 151-154, 171-174) correspondants à un organe de commande manuelle (13, 15, 17) sont placés à une distance de cet organe de commande manuelle inférieure à la distance séparant le ou les indicateurs lumineux d'un autre organe de commande manuelle.

5. Pupitre de commande selon l'une des revendications précédentes, **caractérisé en ce que** au moins un des indicateurs lumineux (131-134, 151-154, 171-174) est fixé directement sur un panneau principal (10) du pupitre de commande (1).

6. Pupitre de commande selon l'une des revendications précédentes, **caractérisé en ce que** au moins un des indicateurs lumineux (131-134, 151-154, 171-174) est prévu sur une embase (18) fixée sur un panneau principal (10) du pupitre de commande (1).

7. Pupitre de commande selon l'une des revendications précédentes, **caractérisé en ce que** au moins un des indicateurs lumineux (135-138) est fixé sur l'organe de commande manuelle (13) correspondant à cet indicateur lumineux.

8. Pupitre de commande selon la revendication 6, **caractérisé en ce que** l'embase (18) est formée par un circuit imprimé rigide recouvert d'une membrane étanche, et **en ce que** au moins un des indicateurs lumineux (131-134, 151-154, 171-174) est intégré au circuit imprimé rigide.

9. Pupitre de commande selon l'une des revendications précédentes, **caractérisé en ce que** les indicateurs lumineux (135-138) sont surmontés d'un diffuseur (191, 192) adapté pour élargir la surface d'émission lumineuse des indicateurs lumineux.

10. Pupitre de commande selon la revendication 9, **caractérisé en ce que** les diffuseurs (191-192) sont adaptés pour former une surface lumineuse d'une forme prédéfinie.

11. Pupitre de commande selon l'une des revendications précédentes, **caractérisé en ce que** les indicateurs lumineux (131-134, 151-154, 171-174) sont adaptés pour émettre un ou plusieurs signaux lumineux parmi:
- un signal lumineux rouge permanent en cas d'impossibilité de réalisation d'un mouvement ;
- un signal lumineux rouge émis uniquement en cas d'actionnement d'un organe de commande manuelle (13, 15, 17) alors que le mouvement correspondant est impossible ;
- un clignotement vert au cours de l'actionnement d'un organe de commande manuelle (13, 15, 17) correspondant à un mouvement réalisable.

12. Pupitre de commande selon l'une des revendications précédentes, **caractérisé en ce que** au moins un indicateur lumineux (131-134, 151-154, 171-174) est adapté pour afficher un signal lumineux témoignant qu'un actionneur de la nacelle élévatrice (3), utilisé pour réaliser le mouvement commandé par cet organe de commande manuelle (13, 15, 17), est ou n'est pas en fin de course.

13. Pupitre de commande selon l'une des revendications précédentes, **caractérisé en ce que** les conditions de fonctionnement de la nacelle élévatrice (3) comprennent au moins un paramètre parmi une liste incluant au moins:
- la position de la plateforme (32) par rapport à une enveloppe de mouvements autorisés ;
- la masse emportée sur la plateforme (32) ;
- l'angle d'inclinaison du châssis (30) ;
- le roulage du châssis (30) au sol ou le déplacement de la structure élévatrice (34) ;

14. Nacelle élévatrice (3) comprenant un pupitre de commande (1) selon l'une des revendications précédentes.

## Patentansprüche

1. Steuerkonsole (1) für eine Hubarbeitsbühne (3) umfassend ein Fahrgestell (30), eine Plattform (32) und eine Hebestruktur (34), die das Fahrgestell (30) mit der Plattform (34) verbindet, wobei das Steuerkonsole (1) Mittel zur manuellen Steuerung (13, 15, 17) zum Steuern der Hubarbeitsbühne (3) umfasst, **dadurch gekennzeichnet, dass** es, für mindestens eines der Mittel zur manuellen Steuerung (13, 15, 17), mindestens einen Leuchtanzeiger (131-134, 135-138, 151-154, 171-174) umfasst, der auf oder in der unmittelbaren Umgebung dieses Mittels zur manuellen Steuerung (13, 15, 17) vorgesehen ist und eingerichtet ist, um Leuchtsignale zur Anzeige der Möglichkeit der Betätigung dieses Mittels zur manuellen Steuerung (13, 15, 17) in Abhängigkeit von den Betriebsbedingungen der Hubarbeitsbühne (3) zu emittieren.

2. Steuerkonsole nach Anspruch 1, **dadurch gekennzeichnet, dass** jedes Mittel zur manuellen Steuerung (13, 15, 17) in mindestens zwei Richtungen betätigbar ist, und dass das Steuerkonsole (1) Leuchtanzeiger (131-134, 135-138, 151-154, 171-174) umfasst, die einem der Mittel zur manuellen Steuerung (13, 15, 17) entsprechen und eingerichtet sind, um die Möglichkeit der Betätigung dieses Mittels zur manuellen Steuerung (13, 15, 17) in jeder der möglichen Betätigungsrichtungen anzuzeigen, in Abhängigkeit von der Möglichkeit der Realisierung der Bewegungen der Hubarbeitsbühne (3), die durch die Betätigung dieses Mittels zur manuellen Steuerung (13, 15, 17) in diesen Richtungen gesteuert werden.

3. Steuerkonsole nach Anspruch 2, **dadurch gekennzeichnet, dass** jeder Leuchtanzeiger (131-134, 135-138, 151-154, 171-174) relativ zu dem entsprechenden Mittel zur manuellen Steuerung (13, 15, 17) in einer Richtung positioniert ist, die einer Betätigungsrichtung dieses Mittels zur manuellen Steuerung (13, 15, 17) entspricht.

4. Steuerkonsole nach einem der vorhergehenden Ansprüche, **dadurch gekennzeichnet, dass** der oder die Leuchtanzeiger (131-134, 151-154, 171-174), der/die einem Mittel zur manuellen Steuerung (13, 15, 17) entspricht/entsprechen, in einem Abstand zu diesem Mittel zur manuellen Steuerung angeordnet ist/sind, der kleiner ist als der Abstand, der den oder die Leuchtanzeiger eines anderen Mittels zur manuellen Steuerung trennt.

5. Steuerkonsole nach einem der vorhergehenden Ansprüche, **dadurch gekennzeichnet, dass** mindestens einer der Leuchtanzeiger (131-134, 151-154, 171-174) direkt auf einer Hauptplatte (10) der Steuerkonsole (1) befestigt ist.

6. Steuerkonsole nach einem der vorhergehenden Ansprüche, **dadurch gekennzeichnet, dass** mindestens einer der Leuchtanzeiger (131-134, 151-154, 171-174) auf einer Befestigungsfläche (18) vorgesehen ist, die auf einer Hauptplatte (10) der Steuerkonsole (1) befestigt ist.

7. Steuerkonsole nach einem der vorhergehenden Ansprüche, **dadurch gekennzeichnet, dass** mindestens einer der Leuchtanzeiger (135-138) auf dem Mittel zur manuellen Steuerung (13) befestigt ist, das diesem Leuchtanzeiger entspricht.

8. Steuerkonsole nach Anspruch 6, **dadurch gekennzeichnet, dass** die Befestigungsfläche (18) von einer starren gedruckten Schaltung gebildet ist, die mit einer Dichtmembran beschichtet ist, und dass mindestens einer der Leuchtanzeiger (131-134, 151-154, 171-174) in die starre gedruckte Schaltung integriert ist.

9. Steuerkonsole nach einem der vorhergehenden Ansprüche, **dadurch gekennzeichnet, dass** die Leuchtanzeiger (135-138) von einem Streukörper (191, 192) überragt sind, der eingerichtet ist, um die Lichtemissionsfläche der Leuchtanzeiger zu verbreitern.

10. Steuerkonsole nach Anspruch 9, **dadurch gekennzeichnet, dass** die Streukörper (191-192) eingerichtet sind, um eine Leuchtfläche einer vordefinierten Form zu bilden.

11. Steuerkonsole nach einem der vorhergehenden Ansprüche, **dadurch gekennzeichnet, dass** die Leuchtanzeiger (131-134, 151-154, 171-174) eingerichtet sind, um ein oder mehrere Leuchtsignale zu emittieren aus
- einem permanenten roten Leuchtsignal für den Fall der Unmöglichkeit der Realisierung einer Bewegung;
- einem roten Leuchtsignal, das nur für den Fall der Betätigung eines Mittels zur manuellen Steuerung (13, 15, 17) emittiert wird, während die entsprechende Bewegung unmöglich ist;
- einem grünen Blinken im Laufe der Betätigung eines Mittels zur manuellen Steuerung (13, 15, 17), das einer realisierbaren Bewegung entspricht.

12. Steuerkonsole nach einem der vorhergehenden Ansprüche, **dadurch gekennzeichnet, dass** mindestens einer der Leuchtanzeiger (131-134, 151-154, 171-174) eingerichtet ist, um ein Leuchtsignal anzuzeigen, das vermeldet, dass ein Aktuator der Hubarbeitsbühne (3), der zur Realisierung der durch dieses Mittel zur manuellen Steuerung (13, 15, 17) gesteuerten Bewegung verwendet wird, in Endlage oder nicht in Endlage ist.

13. Steuerkonsole nach einem der vorhergehenden Ansprüche, **dadurch gekennzeichnet, dass** die Betriebsbedingungen der Hubarbeitsbühne (3) mindestens einen Parameter aus einer Liste umfassen, umfassend mindestens:
- die Position der Plattform (32) relativ zu einer Hüllkurve zulässiger Bewegungen;
- die auf der Plattform (32) mitgenommene Masse;
- den Neigungswinkel des Fahrgestells (30);
- das Rollen der Plattform (32) auf dem Boden oder das Verfahren der Hebestruktur (34);

14. Hubarbeitsbühne (3) umfassend ein Steuerkonsole (1) nach einem der vorhergehenden Ansprüche.

## Claims

1. A control console (1) for an aerial lift (3) including a chassis (30), a platform (32), and a lift structure (34) connecting the chassis (30) to the platform (34), the control console (1) comprising manual control members (13, 15, 17) for controlling the aerial lift (3), **characterized in that** it comprises, for at least one of the manual control members (13, 15, 17), at least one lighted indicator (131-134, 135-138, 151-154, 171-174) provided on or in the immediate environment of this manual control member (13, 15, 17) and suitable for emitting lighted signals indicating the possibility of actuating this manual control member (13, 15, 17) as a function of the operating conditions of the aerial lift (3).

2. The control console according to claim 1, **characterized in that** each manual control member (13, 15, 17) can be actuated in at least two directions, and **in that** the control console (1) comprises lighted indicators (131-134, 135-138, 151-154, 171-174) corresponding to one of the manual control members (13, 15, 17) and suitable for indicating the possibility of actuating this manual control member (13, 15, 17) in each of the possible actuating directions, based on the possibility of performing movements of the aerial lift (3) commanded by the actuation of this manual control member (13, 15, 17) in these directions.

3. The control console according to claim 2, **characterized in that** each lighted indicator (131-134, 135-138, 151-154, 171-174) is positioned relative to the corresponding manual control member (13, 15, 17) in a direction corresponding to an actuating direction of this manual control member (13, 15, 17).

4. The control console according to one of the preceding claims, **characterized in that** the lighted indicator(s) (131-134, 151-154, 171-174) corresponding to a manual control member (13, 15, 17) are placed at a distance from this manual control member smaller than the distance separating the lighted indicator(s) of another manual control member.

5. The control console according to one of the preceding claims, **characterized in that** at least one of the lighted indicators (131-134, 151-154, 171-174) is fastened directly on a main panel (10) of the control console (1).

6. The control console according to one of the preceding claims, **characterized in that** at least one of the lighted indicators (131-134, 151-154, 171-174) is provided on a base (18) fastened on a main panel (10) of the control console (1).

7. The control console according to one of the preceding claims, **characterized in that** at least one of the lighted indicators (135-138) is fastened directly on the manual control member (13) corresponding to this lighted indicator.

8. The control console according to claim 6, **characterized in that** the base (18) is formed by a rigid printed circuit covered by a sealed membrane, and at least one of the lighted indicators (131-134, 151-154, 171-174) is integrated into the rigid printed circuit.

9. The control console according to one of the preceding claims, **characterized in that** the lighted indicators (135-138) are topped by a diffuser (191, 192) suitable for widening the light emission surface of the lighted indicators.

10. The control console according to claim 9, **characterized in that** the diffusers (191-192) are suitable for forming a lighted surface with a predefined shape.

11. The control console according to one of the preceding claims, **characterized in that** the lighted indicators (131-134, 151-154, 171-174) are suitable for emitting one or several light signals from among:
- a steady red light signal if it is impossible to perform a movement;
- a red light signal emitted only if a manual control member (13, 15, 17) is actuated while the corresponding movement is impossible;
- a blinking green light during the actuation of a manual control member (13, 15, 17) corresponding to a performable movement.

12. The control console according to one of the preceding claims, **characterized in that** at least one lighted indicator (131-134, 151-154, 171-174) is suitable for displaying a lighted signal attesting that an actuator of the aerial lift (3), used to perform the movement commanded by this manual control member (13, 15, 17), is or is not at the end of travel.

13. The control console according to one of the preceding claims, **characterized in that** the operating conditions of the aerial lift (3) comprise at least one parameter from among a list including at least:
- the position of the platform (32) relative to an authorized movement envelope;
- the mass carried on the platform (32);
- the incline angle of the chassis (30);
- the rolling of the chassis (30) on the ground or the movement of the lift structure (34).

14. An aerial lift (3) comprising a control console (1) according to any one of the preceding claims.
